**Europäisches Patentamt**

**European Patent Office**

**Office européen des brevets**

(19)

(11) Veröffentlichungsnummer : **0 124 505 B1**

(12) **EUROPÄISCHE PATENTSCHRIFT**

(45) Veröffentlichungstag der Patentschrift :
30.07.86

(21) Anmeldenummer : 84890072.6

(22) Anmeldetag : 18.04.84

(51) Int. Cl.⁴ : **B 29 B  9/02**

(54) Vorrichtung zur Herstellung von Granulatkörnern aus Kunststoffschmelzen.

(30) Priorität : 27.04.83 AT 1526/83

(43) Veröffentlichungstag der Anmeldung :
07.11.84 Patentblatt 84/45

(45) Bekanntmachung des Hinweises auf die Patenterteilung : 30.07.86 Patentblatt 86/31

(84) Benannte Vertragsstaaten :
**BE CH DE FR GB IT LI LU NL SE**

(56) Entgegenhaltungen :
**DD-A-  132 475**
**DE-A- 1 915 950**
**DE-A- 2 200 114**
**DE-B- 1 454 888**
**DE-B- 2 035 035**

(73) Patentinhaber : **EREMA Engineering-Recycling-Maschinen-Anlagen Gesellschaft m.b.H.**
**Stummerstrasse 4**
**A-4060 Leonding-Linz (AT)**

(72) Erfinder : **Wendelin, Georg**
**Am Hartmayrgut 5**
**A-4040 Linz (AT)**

(74) Vertreter : **Boeckmann, Peter, Dipl.Ing. et al**
**Strohgasse 10**
**A-1030 Wien (AT)**

## Beschreibung

Die Erfindung betrifft eine Vorrichtung zur Herstellung von Granulatkörnern aus Kunststoffschmelzen, mit einem Granulierkopf, an den eine Lochplatte angeschlossen ist, die mit Schmelzenaustrittsöffnungen versehen ist, welche von rotierenden Messern überschliffen werden, sowie mit einem an die Lochplatte anschließenden, zu seiner Achse rotationssymmetrisch ausgebildeten Granuliergehäuse, welches mit mehreren über seinen Umfang verteilt angeordneten Düsen versehen ist, über welche ein Kühl- und Transportmedium in das Innere des Granuliergehäuses zugeführt wird, wobei das Kühl- und Transportmedium spiralförmig in Richtung zu einer Abfuhreinrichtung strömt, wo es zusammen mit den Granulatkörnern abgeführt wird.

Eine derartige Vorrichtung ist aus der DE-B-1 454 888 bekannt.

Mit Granuliervorrichtungen werden bekanntlich aus einer warmen Kunststoffschmelze Granulatkörner hergestellt, welche als Ausgangsmaterial für die Herstellung von Kunststoffteilen Verwendung finden. Bei einer solchen Vorrichtung muß dafür gesorgt werden, daß die durch Zerkleinerung der aus den Öffnungen der Lochscheibe austretenden Kunststoffschmelze mittels der rotierenden Messer entstehenden Granulatkörner im Granuliergehäuse rasch abgekühlt werden, bevor sie abgeführt werden, um zu verhindern, daß die noch warmen Granulatkörner deformiert werden, zusammenkleben und/oder an der Wand des Granuliergehäuses ankleben.

Bei einer bekannten Vorrichtung wird ein Wasserstrahl tangential in eine hinter der Lochscheibe und den rotierenden Messern vorgesehene Kammer eingespritzt und dort zu einem schnell rotierenden Wasserring gestaut. Das aus der Kammer überfließende Wasser bedeckt rotierend die gesamte Innenfläche des Granuliergehäuses und tritt an dem der Lochscheibe gegenüberliegenden Ende aus diesem Gehäuse aus. Die Fließgeschwindigkeit des Wassers in Richtung der Gehäuseachse wird hiebei durch die Gefällehöhe des Wasserringes vom Eintritt zum Austritt bestimmt und kann nur durch Steigerung des Wasserdurchsatzes verändert werden. Bei dieser Vorrichtung tritt der Nachteil auf, daß, bedingt durch das verwendete Gefälle-Transportsystem, kein rascher Abtransport der Granulatkörner aus dem Auftreffbereich an der Wand des Granuliergehäuses erfolgt, um ein Aufeinanderschichten und damit Zusammenkleben der Granulatkörner zu verhindern.

Es sind auch Vorrichtungen bekannt, bei denen das Kühl- und Transportmedium tangential in das Granuliergehäuse einmünden gelassen wird, wobei dieses Medium in schraubenförmigen Stromlinien entlang der Wand des Granuliergehäuses in Richtung zum Auslaß strömt bzw. sich schraubenlinig voranbewegt. Die axiale Fließkomponente wird hiebei durch ein Gefälle des Granuliergehäuses in Richtung zum Auslaß bzw. wie bei der aus der DE-B-1 454 888 bekannten Vorrichtung durch ein konisch erweitertes Granuliergehäuse erzielt. Die hiedurch bewirkte axiale Komponente der Bewegung des flüssigen Kühlmittels reicht vor allem im Bereich der Düsen nicht aus, so daß in diesem Bereich zunächst im wesentlichen nur ein rotierende Ring des Kühlmediums entsteht, was zum Nachteil führt, daß dort, wo das Granulat auf das Kühlmedium auftrifft bzw. in dieses eintritt, das Granulat nicht genügend rasch in Richtung zum Auslaß weitertransportiert wird. Dadurch treffen die Granulatkörner aufeinander auf und es werden unerwünschte Agglomerate gebildet.

Die vorliegende Erfindung hat sich zur Aufgabe gestellt, eine Vorrichtung zur Herstellung von Granulatkörnern aus Kunststoffschmelzen derart zu verbessern, daß ein Aufeinanderschichten und Zusammenkleben der Granulatkörner im Granuliergehäuse sowie ein Ankleben an der Wand dieses Gehäuses mit Sicherheit vermieden wird. Die Erfindung geht hierbei aus von einer Vorrichtung der eingangs beschriebenen Art und besteht im wesentlichen darin, daß die Richtung der Achse jede Düse mit der Richtung der Achse des Granuliergehäuses einen spitzen Winkel einschließt, so daß das Kühl- und Transportmedium in das Granuliergehäuse in Form einer mehrgängigen Spirale mit einander überdeckenden Spiralgängen, mit einer Bewegungskomponente vom Granulierkopf weg, eingeleitet wird. Dadurch hat das Kühl- und Transportmedium schon beim Austritt aus den Düsen eine Bewegungskomponente vom Granulierkopf weg, so daß die Granulatkörner sofort nach ihrem Entstehen in axialer Richtung abtransportiert werden, so daß keine Anhäufung von Granulatkörnern im Bereich der Lochscheibe und der mit dieser Lochscheibe zusammenwirkenden rotierenden Messer entsteht, wo die Granulatkörner aneinanderkleben können. Durch die rotierende mehrgängige Spirale wird weiters ein im wesentlichen kontinuierlicher Mediummantel geschaffen, der ein Ankleben der Granulatkörner an der Gehäusewand mit Sicherheit verhindert.

Beste Werte ergeben sich, wenn die Düsenachse mit der Gehäuseachse einen Winkel zwischen 60° und 80° einschließt.

Zweckmäßig sind die Düsen gleichmäßig verteilt am Umfang des Granuliergehäuses angeordnet, wobei vorzugsweise zwei bis acht Düsen, und zwar bei einem kleineren Gehäusedurchmesser eine geringere Anzahl und bei einem größeren Gehäusedurchmesser eine größere Anzahl von Düsen, vorgesehen sind. Es ergibt sich dann eine mehrgängige, die gesamte Wandung des Granuliergehäuses bedeckende Spirale des Kühl- und Transportmediums mit höchster axialer Geschwindigkeit im Auftreffbereich der Granulierkörner an der Gehäusewandung. Zweckmäßig verlaufen hiebei die Düsenachsen etwa tangential zur Wand des Granuliergehäuses.

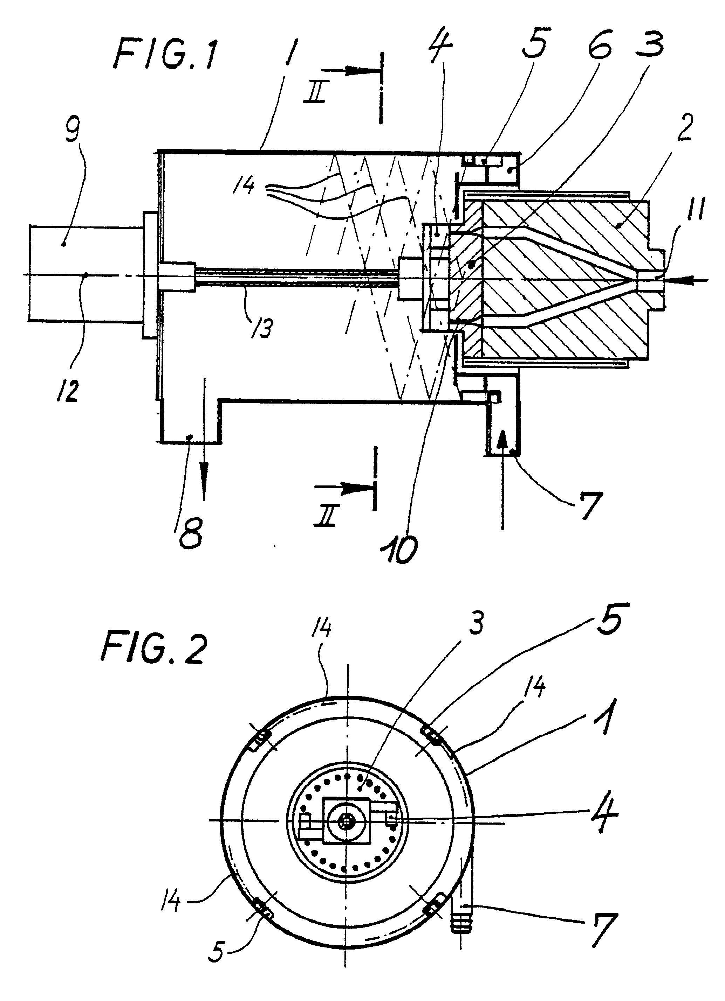

In der Zeichnung ist die Erfindung an Hand eines Ausführungsbeispieles schematisch veranschaulicht. Fig. 1 zeigt eine erfindungsgemäße Vorrichtung im Längsschnitt und Fig. 2 stellt einen Querschnitt in Richtung des Pfeiles II-II in Fig. 1 dar.

Die erfindungsgemäße Vorrichtung weist einen an ein zu seiner horizontalen Achse 12 rotationssymmetrisch ausgebildetes Granuliergehäuse 1 angeschlossenen Granulierkopf 2 auf, dem über eine Eintrittsöffnung 11 die Kunststoffschmelze zugeführt wird und an dessen der Eintrittsöffnung 11 gegenüberliegenden Ende eine Lochplatte 3 befestigt ist, die mit im konzentrischen Kreis um die Achse 12 angeordneten Schmelzeaustrittsöffnungen 10 versehen ist. Die Lochplatte 3 wird von rotierenden Messern 4 überschliffen, deren Antrieb über eine Welle 13 von einem Motor 9 aus erfolgt. Die Anzahl der Messer 4, die Rotationsgeschwindigkeit derselben und die Anzahl der Öffnungen 10 bestimmen bei gegebener Materialdurchsatzmenge die Form der Granulatkörner. Die von den Messern 4 abgeschnittenen Granulatkörner werden durch die Rotationsbewegung der Messer 4 beschleunigt und in Richtung zur Innenwand des zylindrischen Granuliergehäuses 1 geschleudert. Diese Granulatkörner müssen nun gekühlt und aus dem Granuliergehäuse 1 über eine Öffnung 8 abtransportiert werden, aus welcher Öffnung auch das Kühl- und Transportmedium austritt. Dieses von einer Druckquelle kommende Kühl- und Transportmedium, beispielsweise Luft oder Wasser, tritt über ein Einlaßrohr 7 in eine Verteilerkammer 6 für das Kühl- und Transportmedium ein, von wo es über Einspritzdüsen 5 in den Innenraum des Granuliergehäuses 1 eingespritzt wird. Die Richtung der Achse jeder Einspritzdüse 5 schließt mit der Richtung der Gehäuseachse 12 einen spitzen Winkel von etwa 60 bis 80° ein und verläuft ferner tangential zur Wand des Granuliergehäuses 1. Wie aus Fig. 2 hervorgeht, sind beim dargestellten Ausführungsbeispiel vier in gleichen Abständen voneinander entlang des Umfanges des Granuliergehäuses 1 verteilt angeordnete Einspritzdüsen 5 vorgesehen. Die Anzahl der Einspritzdüsen 5 wird zweckmäßig in Abhängigkeit vom Durchmesser des Granuliergehäuses 1 gewählt. Bei einem Gehäusedurchmesser von 300 mm sind zweckmäßig zwei bis vier Einspritzdüsen 5, bei einem Gehäusedurchmesser von 600 mm sind zweckmäßig vier bis acht Einspritzdüsen 5 vorgesehen.

Durch die beschriebene Anordnung der Einspritzdüsen 5 ergibt sich im Granuliergehäuse 1 ein Umlauf des Kühl- und Transportmediums in Form einer mehrgängigen Spirale 14 mit einander überdeckenden Spiralgängen, wodurch ein rascher Abtransport der Granulatkörner aus jenem Bereich erfolgt, in welchem die Granulatkörner nach dem Schnitt durch die Messer 4 auf den umlaufenden Strom des Kühl- und Transportmediums treffen. Die Verweilzeit der Granulatkörner im Kühlmittel läßt sich durch Wahl des Winkels, den die Düsenachsen mit der Gehäuseachse 12 einschließen, auf einen genügend langen Wert einstellen, welcher sicherstellt, daß nach Verlassen des Gehäuses 1 und nach dem Abtrennen des Kühl- und Transportmediums mittels eines nicht dargestellten Rüttelsiebes oder einer nicht dargestellten Zentrifuge die Restwärme der Granulatkörner nicht mehr zum Zusammenbacken ausreicht.

**Patentansprüche**

1. Vorrichtung zur Herstellung von Granulatkörnern aus Kunststoffschmelzen, mit einem Granulierkopf (2), an den eine Lochplatte (3) angeschlossen ist, die mit Schmelzenaustrittsöffnungen (10) versehen ist, welche von rotierenden Messern (4) überschliffen werden, sowie mit einem an die Lochplatte (3) anschließenden, zu seiner Achse (12) rotationssymmetrisch ausgebildeten Granuliergehäuse (1), welches mit mehreren über seinen Umfang verteilt angeordneten Düsen (5) versehen ist, über welche ein Kühl- und Transportmedium in das Innere des Granuliergehäuses (1) zugeführt wird, wobei das Kühl- und Transportmedium spiralförmig in Richtung zu einer Abfuhreinrichtung strömt, wo es zusammen mit den Granulatkörnern abgeführt wird, dadurch gekennzeichnet, daß die Richtung der Achse jeder Düse (5) mit der Richtung der Achse (12) des Granuliergehäuses (1) einen spitzen Winkel derart einschließt, daß das Kühl- und Transportmedium in das Granuliergehäuse (1) in Form einer mehrgängigen Spirale (14) mit einander überdeckenden Spiralgängen, mit einer Bewegungskomponente vom Granulierkopf (2) weg, eingeleitet wird.

2. Vorrichtung nach Anspruch 1, dadurch gekennzeichnet, daß die Richtung der Achse jeder Düse (5) mit der Richtung der Achse (12) des Granuliergehäuses (1) einen Winkel zwischen 60° und 80° einschließt.

3. Vorrichtung nach Anspruch 1 oder 2, dadurch gekennzeichnet, daß die Achse jeder Düse (5) etwa tangential zur Wand des Granuliergehäuses (1) verläuft.

4. Vorrichtung nach Anspruch 1, 2 oder 3, dadurch gekennzeichnet, daß die Düsen (5) über den Umfang des Granuliergehäuses (1) gleichmäßig verteilt angeordnet sind.

5. Vorrichtung nach einem der Ansprüche 1 bis 4, dadurch gekennzeichnet, daß zwei bis acht Düsen (5) vorhanden sind, und zwar bei einem kleineren Gehäusedurchmesser eine geringere Anzahl und bei einem größeren Gehäusedurchmesser eine größere Anzahl von Düsen (5).

**Claims**

1. A device for producing granulated grains from molten plastics materials, having a granulating head (2), to which a perforated plate (3) is attached, which is provided with outlet openings (10) for the molten material, over which openings rotating knives (4) slide, and a granulating housing (1), which is connected to the perforated plate (3), which is rotationally symmetrical relative to its axis (12), and which is provided with a plurality of nozzles (5) distributed over its circumference, via which nozzles a cooling and conveying medium is supplied to the inside of the granulating housing (1), the cooling and conveying medium flowing spirally in the direction of an outlet device, where it is drawn off together with the granulated grains, characterised in that the direction of the axis of each nozzle (5) and the direction of the axis (12) of the granulating housing (1) form an acute angle, such that the cooling and conveying medium is introduced into the granulating housing (1) in the form of a multiple spiral (14) with overlapping spiral paths and with a component motion away from the granulating head (2).

2. A device according to claim 1, characterised in that the direction of the axis of each nozzle (5) and the direction of the axis (12) of the granulating housing (1) form an angle of between 60° and 80°.

3. A device according to claim 1 or 2, characterised in that the axis of each nozzle (5) extends approximately tangentially to the wall of the granulating housing (1).

4. A device according to claim 1, 2 or 3, characterised in that the nozzles (5) are arranged uniformly distributed over the circumference of the granulating housing (1).

5. A device according to any one of claims 1 to 4, characterised in that two to eight nozzles (5) are provided, a small number of nozzles (5) being provided in the case of a small housing diameter and a larger number being provided in the case of a larger housing diameter.

**Revendications**

1. Dispositif pour la fabrication de granulés à partir de fontes plastiques, avec une tête de granulation (2), à laquelle est raccordée une plaque perforée (3), qui est pourvue d'orifices de sortie de fonte (10) sur lesquels passent des lames révolutives (4), le dispositif comportant également un carter de granulation (1) réalisé symétrique en rotation par rapport à son axe (12), et s'appliquant contre la plaque perforée (3), le dit carter étant pourvu sur sa périphérie d'une pluralité de buses (5) disposées distribuées sur cette périphérie, un agent de refroidissement et de transport étant débité dans l'intérieur du carter de granulation (1) par l'intermédiaire de ces buses, l'agent de refroidissement et de transport s'écoulant selon un parcours hélicoïdal en direction d'une installation d'évacuation où il est évacué conjointement avec les granulés, le dispositif étant caractérisé par le fait que la direction de l'axe de chaque buse (5) décrit avec la direction de l'axe (12) du carter de granulation (1) un angle aigu prévu de manière que l'agent de refroidissement et de transport soit introduit dans le carter de granulation (1) sous la forme d'une spirale à pas multiples (14), avec les pas de la spirale se superposant les uns aux autres, et avec une composante de mouvement s'établissant en éloignement par rapport à la tête de granulation (2).

2. Dispositif selon la revendication 1, caractérisé en ce que la direction de l'axe de chaque buse (5) décrit avec la direction de l'axe (12) du carter de granulation (1) un axe se situant entre 60° et 80°.

3. Dispositif selon la revendication 1 ou 2, caractérisé en ce que l'axe de chaque buse (5) est établi sensiblement tangentiel par rapport à la paroi du carter de granulation (1).

4. Dispositif selon la revendication 1, 2 ou 3, caractérisé en ce que les buses (5) sont disposées en distribution régulière sur la périphérie du carter de granulation (1).

5. Dispositif selon une des revendications 1 à 4, caractérisé en ce qu'on prévoit de deux à huit buses (5), à savoir des buses (5) en plus petit nombre lors d'un petit diamètre de carter, et des buses (5) en plus grand nombre lorsque le diamètre du carter est plus grand.

0 124 505

**FIG.1**

**FIG.2**

1